# EUROPEAN PATENT SPECIFICATION

(11) **EP 4 537 555 B1**
(45) Date of publication and mention of the grant of the patent: **17.06.2026**
(21) Application number: 23918124.1
(22) Date of filing: 16.02.2023
(51) Int. Cl.: H04W 4/06, H04W 4/50

(54) **MULTICAST AND BROADCAST SERVICE IN VARIOUS RADIO RESOURCE CONTROL STATES**
MULTICAST- UND BROADCASTDIENST IN VERSCHIEDENEN FUNKRESSOURCENSTEUERZUSTÄNDEN
SERVICE DE MULTIDIFFUSION ET DE DIFFUSION DANS DIVERS ÉTATS DE COMMANDE DE RESSOURCES RADIO

(43) Date of publication of application: 16.04.2025
(73) Proprietor: ZTE Corporation, Shenzhen, Guangdong 518057 (CN)
(72) Inventor: LI, Yang, Shenzhen, Guangdong 518057 (CN); QI, Tao, Shenzhen, Guangdong 518057 (CN); CHEN, Lin, Shenzhen, Guangdong 518057 (CN)
(74) Representative: Ziebig Hengelhaupt Intellectual Property Attorneys Patentanwaltskanzlei PartGmbB
(86) International application number: PCT/CN2023/076404
(87) International publication number: WO 2024/156119

(56) References cited:
- EP-A1- 4 142 399
- WO-A1-2021/230595
- WO-A1-2021/230595
- CA-A1- 3 141 346
- CN-A- 114 982 321
- KR-A- 20210 137 880
- US-A1- 2021 045 017
- MEDIATEK INC: "Discussion on broadcast or multicast for RRC_IDLE or INACTIVE UEs", vol. RAN WG1, no. e-Meeting; 20210510 - 20210527, 12 May 2021 (2021-05-12), XP052011410, Retrieved from the Internet <URL:https://ftp.3gpp.org/tsg_ran/WG1_RL1/TSGR1_105-e/Docs/R1-2105383.zip R1-2105383 Discussion on broadcast or multicast for RRC_IDLE or INACTIVE UEs.docx> [retrieved on 20210512]
- MEDIATEK INC.: "Discussion on broadcast or multicast for RRC_IDLE or INACTIVE UEs", 3GPP TSG RAN WG1 #105-E, R1-2105383, 12 May 2021 (2021-05-12), XP052011410

## Description

### TECHNICAL FIELD

The present implementations relate generally to wireless communications, and more particularly to systems, methods, apparatuses, and non-transitory computer-readable media for managing Multicast and Broadcast Service (MBS) in various Radio Resource Control (RRC) states.

### BACKGROUND

MBS is one of the most prominent use cases of Fifth Generation Mobile Network (5G) New Radio (NR) and provides reliable, low-latency, and resource-efficient transmission to multiple terminals that receive the same content. MBS's main usage scenarios include deployment in crowded areas with high concentrations of terminals, such as in concerts, sport stadiums, racing tracks, rallies, dense population areas, and so on to send the same content (e.g., a same video). In some examples, MBS content (e.g., a video) is synchronized to the terminal, and multiple viewing angles of the video are needed. In addition, a large number of users and terminals in a same cell watch Virtual Reality (VR) live broadcasts at the same time. Conventional systems thus encounter the problem of cell congestion. Considering that the number of UEs connected to the cell and the volume of services carried by the cell are limited, the resulted congestion of the cell can lead to reject or reduce the transmission of other services or UEs.

### SUMMARY

The invention is defined in the independent claims.

Further embodiments are defined in the dependent claims.

At least one aspect is directed to a wireless communication method. The method includes receiving, by a wireless communication device from a network, a first configuration supporting multicast reception, the multicast reception includes multicast data channel and multicast control channel, the multicast reception is received by the wireless communication device in a Radio Resource Control (RRC)-inactive state, the first configuration comprises a first Bandwidth Part (BWP) configuration used for receiving the multicast reception in the RRC-inactive state. The method corresponds to a configuration for receiving the multicast data channel in the RRC- inactive state, a first search space, a first control resource set, a first frequency domain location, and a first bandwidth. The method corresponds to a configuration for receiving the multicast control channel reception in the RRC-inactive state, a second search space, a second control resource set, a second frequency domain location, and a second bandwidth. The method includes receiving, by the wireless communication device from the network, the multicast reception according to the first configuration.

At least one aspect is directed to a wireless communication method. The method includes sending, by a network to a wireless communication device, first configuration supporting multicast reception of the wireless communication device, the multicast reception comprises multicast data channel and multicast control channel, the multicast reception is received by the wireless communication device in a Radio Resource Control (RRC)-inactive state. The method includes a first Bandwidth Part (BWP) configuration used for the wireless communication device for receiving the multicast reception in the RRC-inactive state. The method corresponds to a configuration for receiving the multicast data channel in the RRC-inactive state by the wireless communication device, a first search space, a first control resource set, a first frequency domain location, and a first bandwidth, and for receiving the multicast control channel reception in the RRC-inactive state the wireless communication device, a second search space, a second control resource set, a second frequency domain location, and a second bandwidth. The method includes sending, by the network to the wireless communication device when the wireless communication device is in the RRC-inactive state, the multicast reception according to the first configuration.

WO2021230595A1 discloses an operating method of a terminal for receiving multicast and broadcast service (MBS) in a wireless communication system. The operating method may include receiving, from a base station, bandwidth part (BWP) configuration information for receiving MBS, and receiving first MBS data in a BWP corresponding to the BWP configuration information for receiving MBS or an SDL carrier corresponding to the SDL carrier configuration information for receiving MBS, in a radio resource control (RRC) idle mode or an RRC inactive mode, based on the received BWP configuration information or SDL carrier configuration information.

3GPP discussion document R1-2105383 "Discussion on broadcast or multicast for RRC_IDLE or INACTIVE UEs" by MediaTek Inc. discusses feature proposals contributing to wireless network system and basic functions of user equipment (UE) supporting broadcast or multicast in Radio Resource Control (RRC) states, as RRC idle and RRC inactive. The document discusses usage of common frequency resource for group-common physical channels (PDSCH and PDCCH) and configuration of bandwidth parts for UEs supporting multicast and broadcast.

The above and other aspects and their implementations are described in greater detail in the drawings, the descriptions, and the claims.

### BRIEF DESCRIPTION OF THE DRAWINGS

These and other aspects and features of the present implementations is apparent to those ordinarily skilled in the art upon review of the following description of specific implementations in conjunction with the accompanying figures, wherein:
FIG. 1 is a diagram illustrating an example wireless communication network, according to various arrangements.
FIG. 2 is a diagram illustrating a block diagram of an example wireless communication system for transmitting and receiving downlink and uplink communication signals, according to various arrangements.
FIG. 3 depicts an example method of managing MBS in various RRC states, in accordance with present implementations.
FIG. 4 depicts an example method of managing MBS in various RRC states, in accordance with present implementations.
FIG. 5 depicts an example method of managing MBS in various RRC states, in accordance with present implementations.
FIG. 6 depicts an example method of managing MBS in various RRC states, in accordance with present implementations.

### DETAILED DESCRIPTION

The present implementations will now be described in detail with reference to the drawings, which are provided as illustrative examples of the implementations so as to enable those skilled in the art to practice the implementations and alternatives apparent to those skilled in the art. Notably, the figures and examples below are not meant to limit the scope of the present implementations to a single implementation, but other implementations are possible by way of interchange of some or all of the described or illustrated elements. Moreover, where certain elements of the present implementations can be partially or fully implemented using known components, only those portions of such known components that are necessary for an understanding of the present implementations is described, and detailed descriptions of other portions of such known components is omitted so as not to obscure the present implementations. Implementations described as being implemented in software should not be limited thereto, but can include implementations implemented in hardware, or combinations of software and hardware, and vice-versa, as is apparent to those skilled in the art, unless otherwise specified herein. In the present specification, an implementation showing a singular component should not be considered limiting. Rather, the present disclosure is intended to encompass other implementations including a plurality of the same component, and vice-versa, unless explicitly stated otherwise herein. Moreover, applicants do not intend for any term in the specification or claims to be ascribed an uncommon or special meaning unless explicitly set forth as such. Further, the present implementations encompass present and future known equivalents to the known components referred to herein by way of illustration.

In 5G NR, the UE has three RRC states, including RRC_CONNECTED, RRC_IDLE, and RRC_INACTIV,. RRC_INACTIVE is a new state defined by 5G NR. When the UE enters the RRC_INACTIVE state, it will retain part of the context of the access network. The core network side does not know that the UE has transitioned RRC_INACTIVE, that is, the state is transparent to the core network. In the RRC_INACTIVE state, if there is data to be transmitted, it needs to transition to the RRC_CONNECTED state through the connection recovery process. The introducing of RRC_INACTIVE state not only saves energy keep the delay of the control plane in control, i.e., UE can quickly enter the RRC_CONNECTED state with lower CP delay compared to RRC_IDLE.

One of the solutions to have or continue MBS multicast reception in cell congestion or power saving required scenarios, can include having state transition to RRC_INACTIVE for some UEs who have applied MBS multicast. Such UE can be transitioned from RRC_CONNECTED state to RRC_INACTIVE state, to receive or continue receiving the Multicast session. In Rel-17 NR MBS, PTM configuration delivery methods were specified as follows. For Multicast, dedicated signaling was used for Multicast in Rel-17 only. For Broadcast, only SC-PTM like signaling is used. (for Broadcast reception in other SCell, dedicated signaling to delivery SIBx is used) In Rel-18, the requirement of Multicast reception in RRC_INACTIVE is confirmed. Thus, this technical solution can enable a UE to receive or continue receiving MBS services in the RRC_INACTIVE state.

At least one aspect is directed to the design of a PTM configuration and DCI for RRC_INACTIVE UEs. In a released configuration method, PTM configuration is carried in RRCReconfiguration. In Rel-18, MCCH is used to indicate a PTM configuration. For receiving the same session, if there is a need for change in PTM change, all UEs which joined this session group need to be indicated. To use the same PDSCH resources, the PTM configurations carried in MCCH and DCI format used for RRC_INACTIVE UEs are discussed.

For example, a multicast-like configuration is discussed. The parameters carried in MCCH for multicast reuse these of RRCReconfiguration, such as the initial value of RX_DELIV. And DCI format used for RRC_INACTIVE UEs receiving multicast reuses that of RRC_CONNECTED UEs (DCI format 4_1/DCI format 4_2). For example, a broadcast-like configuration is discussed. The parameters carried in MCCH for multicast refer to the parameters which are carried in MCCH for broadcast. And DCI format used for RRC_INACTIVE UEs receiving multicast reuse that of broadcast (DCI format 4_0). For example, a mix-like or hybrid configuration is discussed. The parameters carried in MCCH for multicast refer to the parameters which are carried in MCCH for broadcast. And DCI format used for RRC_INACTIVE UEs receiving multicast reuses that of RRC_CONNECTED UEs (DCI format 4_1/DCI format 4_2). For example, the PTM configuration indicated in MCCH involves the following aspects.

**Table 1.**

| MBS SESSION INFO | MBS SESSION IDENTIFICATION/G-RNTI |
|---|---|
| MRB PDCP Configuration | PDCP Sequence Number Size/Packet header Compression/PDCP Times/the initial value of COUNT value of the first PDCP SDU not delivered to the upper layers(RX_DELIV) |
| MRB RLC Configuration | Logical Channel Identity/RLC Sequence Number Length/RLC Timers |
| MAC Configuration | The configuration of DRX |
| PHY Configuration | BWP Configuration/PDSCH Configuration/PDCCH Configuration/search space (s) / control resource set (s) /frequency domain location and bandwidth |

At least one aspect is directed to the configuration of search space (s), control resource set (s), frequency domain location and bandwidth for RRC_INACTIVE UEs. In a released configuration method, the search space(s), control resource set(s), frequency domain location and bandwidth for multicast reception will be configured in the RRC_CONNECTED state. Then UE will release these configuration when transitions to RRC_INACTIVE state. The configuration used for multicast reception in the RRC_CONNECTED state contains the search space (s) of multicast MTCH, the control resource set (s) of multicast MTCH, and the frequency domain location and bandwidth of multicast MTCH. To continue receiving the multicast service(s) in the RRC_INACTIVE state, the configuration supporting multicast reception in the RRC_INACTIVE state is discussed. The configuration used for multicast reception in the RRC_INACTIVE state contains the search space (s) of multicast MTCH, the control resource set (s) of multicast MTCH, the frequency domain location and bandwidth of multicast MTCH, the search space (s) of multicast MCCH, the control resource set (s) of multicast MCCH, and the frequency domain location and bandwidth of multicast MCCH. For example, the multicast MTCH is used as multicast data channel and the multicast MCCH is used as multicast control channel.

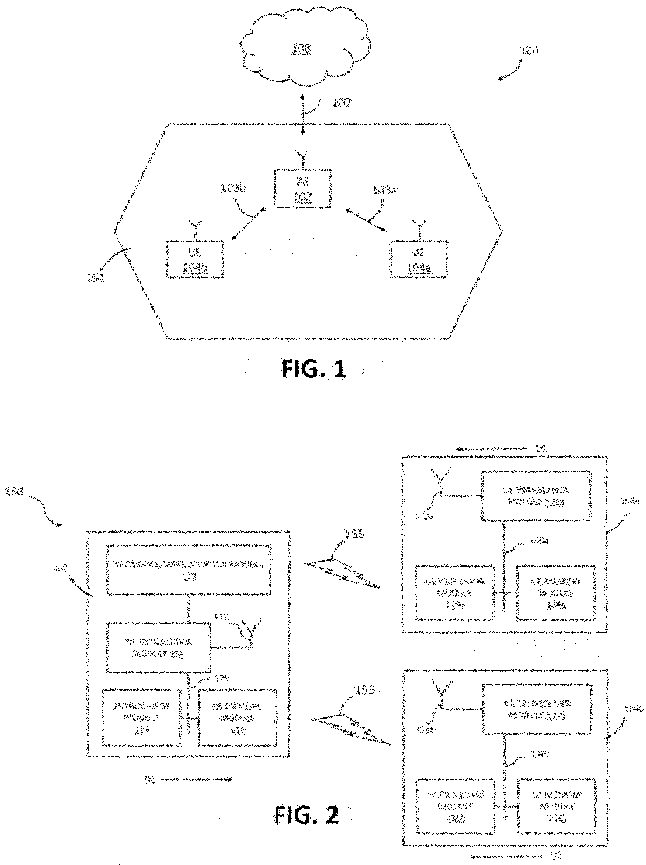

FIG. 1 shows an example wireless communication network 100. The wireless communication network 100 corresponds to a group communication or a multicast service within a cellular network. In the wireless communication network 100, a network-side communication node or a base station (BS) can include one or more of a next Generation Node B (gNB), an E-Utran Node B (also known as Evolved Node B, eNodeB or eNB), a pico station, a femto station, a Transmission/Reception Point (TRP), an Access Point (AP), or the like. A terminal-side node or a UE can include a long range communication system (such as but not limited to, a mobile device, a smart phone, a Personal Digital Assistant (PDA), a tablet, a laptop computer) or a short range communication system (such as but not limited to, a wearable device, a vehicle with a vehicular communication system, or the like). As in FIG. 1, a network-side communication node is represented by a BS 102, and a terminal-side communication node is represented by a UE 104a or 104b. In some arrangements, the BS 102 is sometimes referred to as a "wireless communication node," and the UE 104a/104b is sometimes referred to as a "wireless communication device."

As shown in FIG. 1, the BS 102 can provide wireless communication services to the UEs 104a and 104b within a cell 101. The UE 104a can communicate with the BS 102 via a communication channel 103a. Similarly, the UE 104b can communicate with the BS 102 via a communication channel 103b. The communication channels (e.g., 103a and 103b) can be through interfaces such as but not limited to, an Uu interface which is also known as Universal Mobile Telecommunication System (UMTS) air interface. The BS 102 is connected to a Core Network (CN) 108 through an external interface 107, e.g., an NG interface.

FIG. 2 illustrates a block diagram of an example wireless communication system 150 for transmitting and receiving downlink and uplink communication signals, in accordance with some arrangements of the present disclosure. Referring to FIGS. 1 and 2, the system 150 is a portion of the network 100. In the system 150, data symbols can be transmitted and received in a wireless communication environment such as the wireless communication network 100 of FIG. 1.

The system 150 generally includes the BS 102 and UEs 104a and 104b. The BS 102 includes a BS transceiver module 110, a BS antenna 112, a BS memory module 116, a BS processor module 114, and a network communication module 118. The modules/components are coupled and interconnected with one another as needed via a data communication bus 120. The UE 104a includes a UE transceiver module 130a, a UE antenna 132a, a UE memory module 134a, and a UE processor module 136a. The modules/components are coupled and interconnected with one another as needed via a data communication bus 140a. Similarly, the UE 104b includes a UE transceiver module 130b, a UE antenna 132b, a UE memory module 134b, and a UE processor module 136b. The modules/components are coupled and interconnected with one another as needed via a data communication bus 140b. The BS 102 communicates with the UEs 104a and 104b via communication channels 155, which can be any wireless channel or other medium known in the art suitable for transmission of data as described herein.

The system 150 can further include any number of modules/elements other than the modules/elements shown in FIG. 2. The various illustrative blocks, modules, elements, circuits, and processing logic described in connection with the arrangements disclosed herein can be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionalities. Whether such functionalities are implemented as hardware, firmware, or software depends upon the particular application and design constraints imposed on the overall system. Those familiar with the concepts described herein may implement such functionalities in a suitable manner for each particular application, but such implementation decisions should not be interpreted as limiting the scope of the present disclosure.

A wireless transmission from an antenna of each of the UEs 104a and 104b to an antenna of the BS 102 is known as an uplink transmission, and a wireless transmission from an antenna of the BS 102 to an antenna of each of the UEs 104a and 104b is known as a downlink transmission. In accordance with some arrangements, each of the UE transceiver modules 130a and 130b may be referred to herein as an uplink transceiver, or UE transceiver. The uplink transceiver can include a transmitter circuitry and receiver circuitry that are each coupled to the respective antenna 132a and 132b. A duplex switch may alternatively couple the uplink transmitter or receiver to the uplink antenna in time duplex fashion. Similarly, the BS transceiver module 110 may be herein referred to as a downlink transceiver, or BS transceiver. The downlink transceiver can include RF transmitter circuitry and receiver circuitry that are each coupled to the antenna 112. A downlink duplex switch may alternatively couple the downlink transmitter or receiver to the antenna 112 in time duplex fashion. The operations of the transceivers 110, 130a, and 130b are coordinated in time such that the uplink receiver is coupled to the antenna 132a and 132b for reception of transmissions over the wireless communication channels 155 at the same time that the downlink transmitter is coupled to the antenna 112. In some arrangements, the UEs 104a and 104b can use the UE transceivers 130a and 130b through the respective antennas 132a and 132b to communicate with the BS 102 via the wireless communication channels 155. The wireless communication channel 155 can be any wireless channel or other medium suitable for downlink (DL) and/or uplink (UL) transmission of data as described herein.

The UE transceiver 130a/130b and the BS transceiver 110 are configured to communicate via the wireless data communication channel 155, and cooperate with a suitably configured antenna arrangement that can support a particular wireless communication protocol and modulation scheme. In some arrangements, the UE transceiver 130a/130b and the BS transceiver 110 are configured to support industry standards such as the Long Term Evolution (LTE) and emerging 5G standards, or the like. It is understood, however, that the present disclosure is not necessarily limited in application to a particular standard and associated protocols. Rather, the UE transceiver 130a/130b and the BS transceiver 110 may be configured to support alternate, or additional, wireless data communication protocols, including future standards or variations thereof.

The processor modules 136a and 136b and 114 may be each implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, methods or algorithms described in connection with the arrangements disclosed herein may be embodied directly in hardware, in firmware, in a software module executed by processor modules 114, 136a, and 136b, respectively, or in any practical combination thereof. The memory modules 116, 134a, 134b can be realized as RAM memory, flash memory, ROM memory, EPROM memory, EEPROM memory, registers, a hard disk, a removable disk, a CD-ROM, or another suitable form of storage medium. In this regard, the memory modules 116, 134a, and 134b may be coupled to the processor modules 114, 136a, and 136b, respectively, such that the processors modules 114, 136a, and 136b can read information from, and write information to, the memory modules 116, 134a, and 134b, respectively. The memory modules 116, 134a, and 134b may also be integrated into their respective processor modules 114, 136a, and 136b. In some arrangements, the memory modules 116, 134a, and 134b may each include a cache memory for storing temporary variables or other intermediate information during execution of instructions to be executed by processor modules 114, 136a, and 136b, respectively. Memory modules 116, 134a, and 134b may also each include non-volatile memory for storing instructions to be executed by the processor modules 114, 136a, and 136b, respectively.

The network interface 118 generally represents the hardware, software, firmware, processing logic, and/or other components of the BS 102 that enable bi-directional communication between BS transceiver 110 and other network components and communication nodes configured to communication with the BS 102. For example, the network interface 118 may be configured to support internet or WiMAX traffic. In a typical deployment, without limitation, the network interface 118 provides an 802.3 Ethernet interface such that BS transceiver 110 can communicate with a conventional Ethernet based computer network. In this manner, the network interface 118 may include a physical interface for connection to the computer network (e.g., Mobile Switching Center (MSC)). The terms "configured for" or "configured to" as used herein with respect to a specified operation or function refers to a device, component, circuit, structure, machine, signal, etc. that is physically constructed, programmed, formatted and/or arranged to perform the specified operation or function. The network interface 118 can allow the BS 102 to communicate with other BSs or core network over a wired or wireless connection.

The BS 102 can communicate with a plurality of UEs (including the UEs 104a and 104b) using multicast or broadcast, collectively referred to as MBS. The plurality of UEs can each receive MBS service via multicast and/or broadcast. In order to receive the MBS service, the plurality of UEs have a common understanding on the configurations of the MBS service, including but not limited to, frequency resource range for resource allocation, scrambling sequence, and so on, referred to herein as PTM configuration, multicast configuration, or MBS configurations. The network (e.g., the BS 102 or the cell 101) can deliver the PTM configuration for MBS multicast reception for the UE 104a or 104b in different RRC states.

In some arrangements, the UE 104a or 104b receives the PTM configuration or updates thereof from the network (e.g., the BS 102 or the cell 101) through dedicated signaling specific to the UE. An example of the dedicated signaling includes RRC reconfiguration signaling. For example, when the UE in the RRC-inactive state, the UE initiates the RRC connection resume process to receive the PTM configuration update. When the UE is in the RRC-connected state, the PTM configuration is delivered by the network via dedicated signaling.

At least one aspect is directed to a broadcast-reused configuration. For example, the frequency location and bandwidth for multicast MCCH in the RRC_INACTIVE state is the same as the frequency location and bandwidth for broadcast MCCH, which is carried in SIB20 and always larger than and fully contains the bandwidth for the initial DL BWP configured in SIB1. For example, the frequency location and bandwidth for multicast MTCH in the RRC_INACTIVE state is the same as the frequency location and bandwidth for broadcast MTCH, which is carried in SIB20 and always larger than and fully contains the bandwidth for the initial DL BWP configured in SIB1.

For example, the search space (s) for multicast MCCH in the RRC_INACTIVE state is the same as the search space (s) for broadcast MCCH which are carried in SIB1. For example, the search space (s) for multicast MTCH in the RRC_INACTIVE state is the same as the search space (s) for broadcast MTCH carried in SIB1, which maybe the same as the search space (s) for broadcast MCCH. For example, the control resource set (s) for multicast MCCH in the RRC_INACTIVE state is the same as the control resource set (s) for broadcast MCCH which is carried in SIB20. For example, the control resource set (s) for multicast MTCH in the RRC_INACTIVE state is the same as the control resource set (s) for broadcast MTCH is carried in SIB20, which is the same as the control resource set (s) for broadcast MCCH.

At least one aspect is directed to a first broadcast enhancement. For example, the frequency location and bandwidth for multicast MCCH in the RRC_INACTIVE state is the same as the frequency location and bandwidth for broadcast MCCH, which is carried in SIB20 and always larger than and fully contains the bandwidth for the initial DL BWP configured in SIB1. For example, the frequency location and bandwidth for multicast MTCH in the RRC_INACTIVE state is the same as the frequency location and bandwidth for broadcast MTCH, which is carried in SIB20 and always larger than and fully contains the bandwidth for the initial DL BWP configured in SIB1.

For example, the search space (s) for multicast MCCH in the RRC_INACTIVE state is the same as the search space (s) for broadcast MCCH which are carried in SIB1. For example, the control resource set (s) for multicast MCCH in the RRC_INACTIVE state is the same as the control resource set (s) for broadcast MCCH which is carried in SIB20. For example, the search space (s) for multicast MTCH in the RRC_INACTIVE state can be configured independently, which is different from broadcast. It can be carried in SIB1/SIB20/MCCH message/a new SIB message. For example, the control resource set (s) for multicast MTCH in the RRC_INACTIVE state can be configured independently, which is different from broadcast. It can be carried in SIB1/SIB20/MCCH message/a new SIB message.

At least one aspect is directed to a second broadcast enhancement. For example, the frequency location and bandwidth for multicast MCCH in the RRC_INACTIVE state is the same as the frequency location and bandwidth for broadcast MCCH, which is carried in SIB20 and always larger than and fully contains the bandwidth for the initial DL BWP configured in SIB1. For example, the frequency location and bandwidth for multicast MTCH in the RRC_INACTIVE state is the same as the frequency location and bandwidth for broadcast MTCH, which is carried in SIB20 and always larger than and fully contains the bandwidth for the initial DL BWP configured in SIB1. For example, the search space (s) for multicast MCCH in the RRC_INACTIVE state is the same as the search space (s) for broadcast MCCH which are carried in SIB1. For example, the control resource set (s) for multicast MCCH in the RRC_INACTIVE state is the same as the control resource set (s) for broadcast MCCH which is carried in SIB20. For example, the search space (s) for multicast MTCH in the RRC_INACTIVE state can be configured per service, which is different from broadcast. It can be carried in SIB1/SIB20/MCCH message/a new SIB message. For example, the control resource set (s) for multicast MTCH in the RRC_INACTIVE state can be configured per service, which is different from broadcast. It can be carried in SIB1/SIB20/MCCH message/a new SIB message.

At least one aspect is directed to a third broadcast enhancement. For example, the frequency location and bandwidth for multicast MCCH in the RRC_INACTIVE state is the same as the frequency location and bandwidth for broadcast MCCH, which is carried in SIB20 and always larger than and fully contains the bandwidth for the initial DL BWP configured in SIB1. For example, the frequency location and bandwidth for multicast MTCH in the RRC_INACTIVE state is the same as the frequency location and bandwidth for broadcast MTCH, which is carried in SIB20 and always larger than and fully contains the bandwidth for the initial DL BWP configured in SIB1. For example, the search space (s) for multicast MCCH in the RRC_INACTIVE state can be configured independently, which is different from broadcast. It can be carried in SIB1/SIB20/a new SIB message. For example, the control resource set (s) for multicast MCCH in the RRC_INACTIVE state can be configured independently, which is different from broadcast. It can be carried in SIB1/SIB20/a new SIB message. For example, the search space (s) for multicast MTCH in the RRC_INACTIVE state can be configured independently, which is different from broadcast. It can be carried in SIB1/SIB20/MCCH message/a new SIB message. For example, the control resource set (s) for multicast MTCH in the RRC_INACTIVE state can be configured independently, which is different from broadcast. It can be carried in SIB1/SIB20/MCCH message/a new SIB message.

At least one aspect is directed to a fourth broadcast enhancement. For example, the frequency location and bandwidth for multicast MCCH in the RRC_INACTIVE state is the same as the frequency location and bandwidth for broadcast MCCH, which is carried in SIB20 and always larger than and fully contains the bandwidth for the initial DL BWP configured in SIB1. For example, the frequency location and bandwidth for multicast MTCH in the RRC_INACTIVE state is the same as the frequency location and bandwidth for broadcast MTCH, which is carried in SIB20 and always larger than and fully contains the bandwidth for the initial DL BWP configured in SIB1. For example, the search space (s) for multicast MCCH in the RRC_INACTIVE state can be configured independently, which is different from broadcast. It can be carried in SIB1/SIB20/a new SIB message. For example, the control resource set (s) for multicast MCCH in the RRC_INACTIVE state can be configured independently, which is different from broadcast. It can be carried in SIB1/SIB20/a new SIB message. For example, the search space (s) for multicast MTCH in the RRC_INACTIVE state can be configured per service, which is different from broadcast. It can be carried in SIB1/SIB20/MCCH message/a new SIB message. For example, the control resource set (s) for multicast MTCH in the RRC_INACTIVE state can be configured per service, which is different from broadcast. It can be carried in SIB1/SIB20/MCCH message/a new SIB message.

At least one aspect is directed to a multicast-reused configuration. The frequency location and bandwidth for multicast MTCH in the RRC_INACTIVE state reuses the frequency location and bandwidth for multicast MTCH in the RRC_CONNECTED state, and it can be updated in SIB20/a new SIB message/MCCH message. For example, the frequency location and bandwidth multicast MCCH in the RRC_INACTIVE state can reuse the frequency location and bandwidth for multicast MTCH in the RRC_CONNECTED state, or be contained in the bandwidth for multicast MTCH in the RRC_CONNECTED state, and it can be updated in SIB1/SIB20/a new SIB message. For example, the search space (s) of MCCH for multicast(s) which is received in the RRC_INACTIVE state can be configured independent, different from broadcast, which can be carried by SIB1/a new SIB message. For example, the control resource set (s) of MCCH for multicast(s) which is received in the RRC_INACTIVE state can be configured independently, different from broadcast, which can be carried by SIB1/a new SIB message. For example, the search space (s) of MTCH for multicast(s) which is received in the RRC_INACTIVE state reuses that in the RRC_CONNECTED state, which can be updated in SIB1/SIB20/MCCH message/a new SIB message. For example, the control resource set (s) of MTCH for multicast(s) which is received in the RRC_INACTIVE state, reuses that in the RRC_CONNECTED state, which can be updated in SIB1/SIB20/MCCH message/a new SIB message.

At least one aspect is directed to a further configuration. For example, the frequency location and bandwidth for multicast MCCH in the RRC_INACTIVE state can be configured independently, different from the frequency domain location and bandwidth for broadcast MCCH, it can be carried in SIB20/a new SIB message. For example, the frequency location and bandwidth for multicast MTCH in the RRC_INACTIVE state can be configured independently, different from the frequency domain location and bandwidth for broadcast MTCH, it can be carried in SIB20/a new SIB message/MCCH message. For example, the search space (s) for multicast MCCH in the RRC_INACTIVE state can be configured independently, different from the search space (s) for broadcast MCCH, and it can be defined by SIB1/SIB20/a new SIB message. For example, the control resource set (s) for multicast MCCH in the RRC_INACTIVE state can be configured independently, different from the control resource set (s) for broadcast MCCH, and it can be defined by SIB1/SIB20/a new SIB message. For example, the search space (s) for multicast MTCH in the RRC_INACTIVE state can be configured independently, different from the search space (s) for broadcast MTCH, and it can be defined by SIB1/SIB20/a new SIB message/MCCH message. For example, the control resource set (s) for multicast MTCH in the RRC_INACTIVE state can be configured independently, different from the control resource set (s) for broadcast MTCH, and it can be defined by SIB1/SIB20/a new SIB message/MCCH message.

At least one aspect is directed to a per-service configuration. For example, the frequency location and bandwidth for multicast MCCH in the RRC_INACTIVE state can be configured independently, different from the frequency domain location and bandwidth for broadcast MCCH, it can be carried in SIB20/a new SIB message. For example, the frequency location and bandwidth for multicast MTCH in the RRC_INACTIVE state can be configured per service, different from the frequency domain location and bandwidth for broadcast MTCH, it can be carried in SIB20/a new SIB message/MCCH message. For example, the search space (s) for multicast MCCH in the RRC_INACTIVE state can be configured independently, different from the search space (s) for broadcast MCCH, and it can be defined by SIB1/SIB20/a new SIB message. For example, the control resource set (s) for multicast MCCH in the RRC_INACTIVE state can be configured independently, different from the control resource set (s) for broadcast MCCH, and it can be defined by SIB1/SIB20/a new SIB message. For example, the search space (s) for multicast MTCH in the RRC_INACTIVE state can be configured per service, different from the search space (s) for broadcast MTCH, and it can be defined by SIB1/SIB20/a new SIB message/MCCH message. For example, the control resource set (s) for multicast MTCH in the RRC_INACTIVE state can be configured per service, different from the control resource set (s) for broadcast MTCH, and it can be defined by SIB1/SIB20/a new SIB message/MCCH message.

At least one aspect is directed to the configuration of BWP for RRC_INACTIVE UEs. In a released configuration method, the search space (s), control resource set (s), frequency domain location and bandwidth for receiving multicast will be configured in current active DL BWP in the RRC_CONNECTED state. Then UE will release these configuration when transitions to RRC_INACTIVE state. The BWP used for multicast reception in the RRC_INACTIVE state is discussed. At least one aspect is directed to an initial BWP configuration. For example, the multicast reception in the RRC_INACTIVE state is based on the initial BWP received in SIB 1. At least one aspect is directed to a UE-specific BWP configuration. For example, the multicast reception in the RRC_INACTIVE state is based on the UE-specific BWP which is used for multicast reception in the RRC_CONNECTED state.

At least one aspect is directed to the configuration of monitoring SIB/paging/MCCH in a UE-specific BWP. For example, if the multicast reception in the RRC_INACTIVE state is based on the UE-specific BWP used for multicast reception in the RRC_CONNECTED state which is not overlap with the initial BWP, to ensure the reception of SIB/paging/MCCH in the RRC_INACTIVE state, a common search space (s) for monitoring SIB/paging/MCCH will be configured in the BWP used in the RRC_INACTIVE state. The configuration of common search space (s) can be carried in RRC message (Reconfiguration/RRCRelease).

As least one aspect can include the delivery of an MCCH configuration when RRC_INACTIVE UE moves across cells. For example, to ensure the reception of MCCH for multicast when RRC_INACTIVE UE moves from other cell to current cell, the MCCH configuration should be delivered in initial BWP. For example, the configuration about search space (s)/control resource set (s)/frequency domain location and bandwidth for multicast reception in the RRC_INACTIVE state is carried in SIB message (such as SIB1/SIB20/a new SIB message) which is delivered in the initial BWP.

At least one aspect is directed to UE behavior. In a released configuration method, UE receives multicast by using the corresponding configuration in UE-specific BWP in the RRC_CONNECTED state. Then UE will release these configuration and revert to the initial BWP when transitions to RRC_INACTIVE state. For continue receiving the multicast service(s) in the RRC_INACTIVE state, the UE behavior is discussed.

At least one aspect is directed to a broadcast-reused configuration. For example, a UE receives multicast by using the corresponding configuration in UE-specific BWP in the RRC_CONNECTED state. For example, a UE transitions state from RRC_CONNECTED to RRC_INACTIVE. For example, a UE release or suspend the configuration used for multicast reception in the RRC_CONNECTED state. For example, a UE receives multicast based on the initial BWP and the configuration for broadcast reception in the RRC_INACTIVE state.

At least one aspect is directed to a multicast-reused configuration. For example, a UE receives multicast by using the corresponding configuration in UE-specific BWP in the RRC_CONNECTED state. For example, a UE transitions state from RRC_CONNECTED to RRC_INACTIVE. For example, a UE receives multicast in the RRC_INACTIVE state based on the UE-specific BWP and multicast configuration which are used for multicast reception in the RRC_CONNECTED state.

At least one aspect is directed to a further multicast-reused configuration. For example, a UE receives multicast by using the corresponding configuration in UE-specific BWP in the RRC_CONNECTED state. For example, a UE transitions state from RRC_CONNECTED to RRC_INACTIVE. For example, a UE receives multicast in the RRC_INACTIVE state based on the initial BWP received in SIB1 and multicast configuration which is used for multicast reception in the RRC_CONNECTED state.

At least one aspect is directed to a further configuration. For example, a UE receives multicast by using the corresponding configuration in UE-specific BWP in the RRC_CONNECTED state. For example, a UE transitions state from RRC_CONNECTED to RRC_INACTIVE. For example, a UE can release or suspend the configuration used for multicast reception in the RRC_CONNECTED state. For example, a UE receives multicast in the RRC_INACTIVE state based on the initial BWP received in SIB1 and new multicast configuration which is configured independently for multicast reception in the RRC_INACTIVE state.

At least one aspect is directed to a second further configuration. For example, a UE receives multicast by using the corresponding configuration in UE-specific BWP in the RRC_CONNECTED state. For example, a UE transitions state from RRC_CONNECTED to RRC_INACTIVE. For example, a UE release or suspend the configuration used for multicast reception in the RRC_CONNECTED state. For example, a UE receives multicast in the RRC_INACTIVE state based on the initial BWP received in SIB1 and new multicast configuration which is configured per service for multicast reception in the RRC_INACTIVE state.

At least one aspect is directed to multicast service status change for RRC_INACTIVE UEs. In Rel-18 NR MBS (Multicast and Broadcast services), multicast service can be received for UE in RRC_INACTIVE state. This can be useful when network is congested with large UE numbers. A multicast service has different status in 5G core, and the status change is notified to RAN network. Upon such change, in legacy system, UE might need to resume to RRC_CONNECTED state. However network might not need UE to resume in cases, for example, of network congestion. Therefore solutions are needed, to meet this requirement, that how to enable UE to stay in RRC_INACTIVE upon session status change, under network control.

For example, UE is interested in one multicast service and UE is configured to receive the service in RRC_INACTIVE. UE is RRC_INACTIVE state and keeps monitoring the group paging from RAN. Upon receiving group paging (a paging with payload with the ID of the multicast session UE is interested in), UE is to monitor the MBS control channel (MCCH). In the MCCH it might or might not include the PTM configuration for the multicast services that is scheduled to enable UE to receive the multicast service data in RRC_INACTIVE. If the PTM configuration exists for the corresponding multicast service, UE stays in RRC_INACTIVE. UE might continue the multicast reception in RRC_INACTIVE. If the PTM configuration does not exists, or is removed for the corresponding service, UE shall resume RRC connection.

For example, UE is interested in one multicast service and UE is configured to receive the service in RRC_INACTIVE. UE is RRC_INACTIVE state and keeps monitoring the MCCH from RAN. In the MCCH it might or might not include the PTM configuration for the multicast services that is scheduled to enable UE to receive the multicast service data in RRC_INACTIVE. If the PTM configuration exists for the corresponding multicast service, UE stays in RRC_INACTIVE. UE might continue the multicast reception in RRC_INACTIVE. If the PTM configuration does not exists, or is removed for the corresponding service, UE shall resume RRC connection.

For example, UE determines whether to trigger RRC connection establishment based on the existence of the PTM configuration of its interested multicast services. If the PTM configuration of its interested multicast services does not exist, UE triggers RRC connection establishment. During RRC connection resumption procedure, a resume cause value is provided to network to indicate the above event is the reason for UE to trigger UE to resume. For such event, network might consider such even lower priority to deny the RRC connection establishment. That is, a new cause value is defined for the event that: a UE receiving multicast service in RRC_INACTIVE, the PTM configuration to the corresponding multicast service is removed.

For example, group paging is enhanced to indicate the service status or status change. For one UE that is interested to receive one multicast service, and released to RRC_INACTIVE, it monitors the group paging (a paging with payload with the ID of the multicast session UE is interested in). In the group paging, for one multicast session ID, there might be associated session status or status change. The session status include: active, deactivated, or released; the session status change include: activation, deactivation, or release.

For example, if the session status carried in the group paging is active or the session status change is activation, UE monitors or starts monitoring the MCCH, UE receives or start receiving the multicast service data based on the PTM configuration in the MCCH for UE interested multicast service, or UE monitor or starts monitoring the MCCH change.

For example, if the session status carried in the group paging is deactivated or the session status change is deactivation, UE stops monitoring the MCCH, and UE stops receiving the multicast service data.

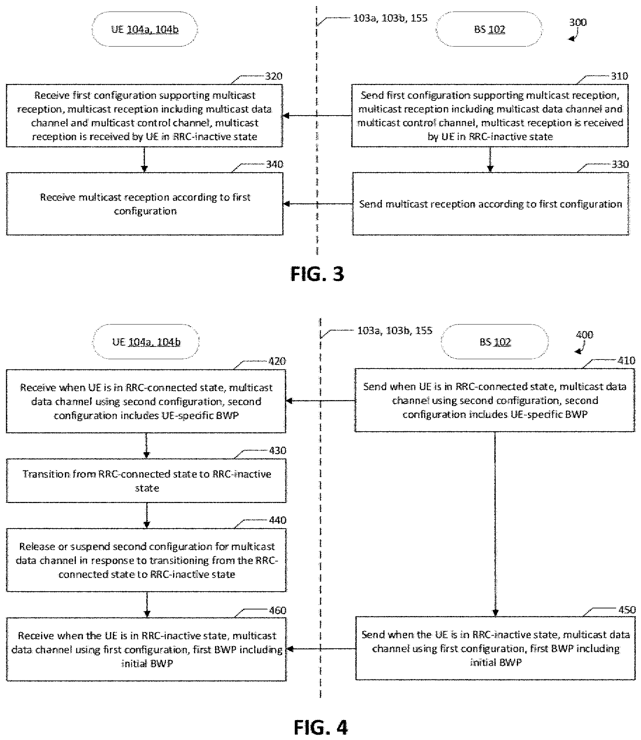

FIG. 3 depicts an example method of managing MBS in various RRC states, in accordance with present implementations. The method 300 can be performed by a UE (e.g., at least one of the UE 104a, 104b) and the BS 102. The steps illustrated in FIGs. 3-5 are not limited to the sequence or order illustrated herein by way of example, and are not limited to the particular actions illustrated herein by way of example. At 310, the BS 102 can send to the UE a first configuration. The first configuration supporting multicast reception in RRC-inactive state. The multicast reception including multicast data channel and multicast control channel. The multicast reception is received by the UE when the UE is in the RRC-inactive state. At 320, the UE receives from the BS 102 the first configuration, the first configuration supporting the multicast reception in the RRC-inactive state. The multicast reception including the multicast data channel and the multicast control channel. At 330, the BS 102 can send the multicast reception according to the first configuration to the UE, when the UE is in the RRC-inactive state. At 340, UE can receive the multicast reception according to the first configuration, when the UE is in the RRC-inactive state.

FIG. 4 depicts an example method of managing MBS in various RRC states, in accordance with present implementations. The method 400 can be performed by a UE (e.g., at least one of the UE 104a, 104b) and the BS 102. At 410, the BS 102 can send to the UE, when the UE is in an RRC-connected state, the multicast data channel using a second configuration, the second configuration including a UE-specific BWP. At 420, the UE can receive from the BS, when the UE is in the RRC-connected state, the multicast data channel using the second configuration which includes the UE-specific BWP. At 430, the UE can transition from an RRC-connected state to an RRC-inactive state, with the assistance of the network and the BS 102. At 440, the UE can release or suspend the second configuration for the multicast data channel in response to transitioning from the RRC-connected state to the RRC-inactive state. At 450, the BS 102 can send to the UE, when the UE is in the RRC-inactive state, the multicast data channel using the first configuration (having the first BWP) and an initial BWP. The first BWP includes the initial BWP. At 460, the UE receives from the BS 102, when the UE is in the RRC-inactive state, the multicast data channel using the first configuration (having the first BWP) and an initial BWP. The first BWP includes the initial BWP. At least a portion of the first configuration is different from at least a portion of the second configuration.

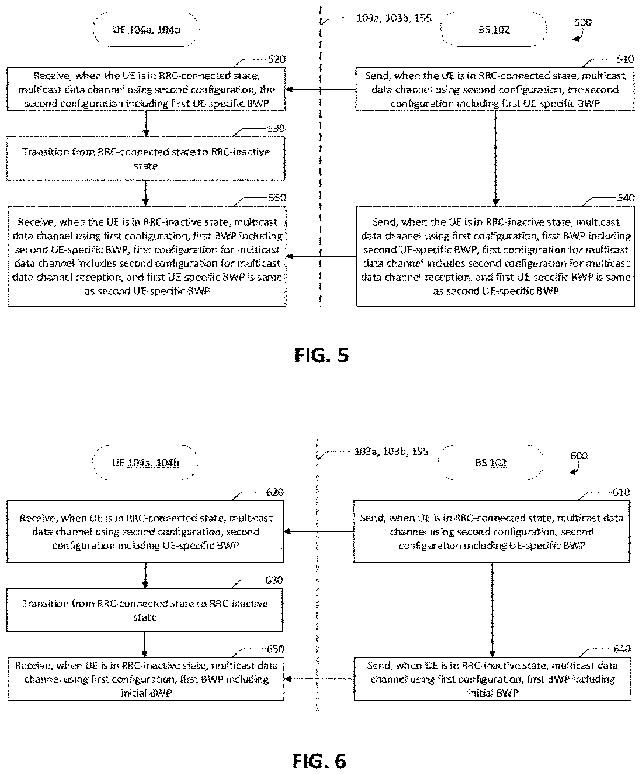

FIG. 5 depicts an example method of managing MBS in various RRC states, in accordance with present implementations. The method 500 can be performed by a UE (e.g., at least one of the UE 104a, 104b) and the BS 102. At 510, the BS 102 can send to the UE, when the UE is in an RRC-connected state, the multicast data channel using a second configuration, the second configuration including a first UE-specific BWP. At 520, the UE can receive from the BS 102, when the UE is in an RRC-connected state, the multicast data channel using the second configuration, which includes the first UE-specific BWP. At 530, the UE can transition from an RRC-connected state to an RRC-inactive state, with the assistance of the network and the BS 102. At 540, the BS 102 can send, when the UE is in the RRC-inactive state, the multicast data channel using the first configuration (having the first BWP), the first BWP includes a second UE-specific BWP. The first configuration for the multicast data channel includes the second configuration for the multicast data channel reception. The first UE-specific BWP is the same as the second UE-specific BWP. At 550, the UE can receive from the BS, when the UE is in the RRC-inactive state, the multicast data channel using the first configuration (having the first BWP), the first BWP includes a second UE-specific BWP. The first configuration for the multicast data channel includes the second configuration for the multicast data channel reception. The first UE-specific BWP is the same as the second UE-specific BWP.

FIG. 6 depicts an example method of managing MBS in various RRC states, in accordance with present implementations. The method 600 can be performed by a UE (e.g., at least one of the UE 104a, 104b) and the BS 102 can perform method 600. At 610, the BS 102 can send to the UE, when the UE is in an RRC-connected state, the multicast data channel using a second configuration, the second configuration including a UE-specific BWP. At 620, the UE can receive from the BS 102, when the UE is in the RRC-connected state, the multicast data channel using the second configuration which includes the UE-specific BWP. At 630, the UE can transition from an RRC-connected state to an RRC-inactive state, with the assistance of the network and the BS 102. At 640, the BS 102 can send to the UE, when the UE is in the RRC-inactive state, the multicast data channel using the first configuration (having the first BWP), the first BWP includes an initial BWP. The first configuration for the multicast data channel includes the second configuration for the multicast data channel. At 650, the UE can receive from the BS 102, when the UE is in the RRC-inactive state, the multicast data channel using the first configuration (having the first BWP), the first BWP includes the initial BWP. The first configuration for the multicast data channel includes the second configuration for the multicast data channel.

For example, in the method, at least one of a frequency domain location and bandwidth of a broadcast data channel is used as the first frequency domain location and the first bandwidth for the multicast data channel, respectively. The method can include or a frequency domain location and bandwidth of a broadcast control channel is used as the second frequency domain location and the second bandwidth for the multicast control channel, respectively.

For example, in the method, at least one of the first frequency domain location and the first bandwidth of the multicast data channel is different from a frequency domain location and a bandwidth for a broadcast data channel, respectively. The method can include or the second frequency domain location and the second bandwidth of the multicast control channel is different from a frequency domain location and a bandwidth for a broadcast control channel, respectively.

For example, in the method, a frequency domain location and a bandwidth of the multicast data channel in a RRC-connected state is used as the first frequency domain location and the first bandwidth of the multicast data channel in the RRC-inactive state.

For example, in the method, the first frequency domain location and the first bandwidth of the multicast data channel received when the wireless communication device is in the RRC-inactive state is configured for each service of the multicast reception.

For example, in the method, the second frequency domain location for the multicast control channel and the first frequency domain location for the multicast data channel are configured to be non-overlapping. The method can include the second bandwidth for the multicast control channel and the first bandwidth for the multicast data channel are configured to be non-overlapping.

For example, in the method, the first frequency domain location and the first bandwidth for the multicast data channel contains the second frequency domain location and the second bandwidth for the multicast control channel, respectively.

For example, in the method, the first frequency domain location and the first bandwidth for the multicast data channel and the second frequency domain location and the second bandwidth for the multicast control channel are received in System Information Block (SIB) 20.

For example, in the method, the first frequency domain location and the first bandwidth for the multicast data channel and the second frequency domain location and the second bandwidth for the multicast control channel are received in a new System Information Block (SIB) message.

For example, in the method, a search space for a broadcast control channel is used as the second search space for the multicast control channel. The method can include a control resource set for a broadcast control channel is used as the second control resource set for the multicast control channel.

For example, in the method, the second search space for the multicast control channel is different from a search space for a broadcast control channel. The method can include the second control resource set for the multicast control channel is different from a control resource set for a broadcast control channel.

For example, in the method, the second search space for the multicast control channel received when the wireless communication device is in the RRC-inactive state is carried in one of System Information Block (SIB) 1, SIB20, or a new SIB message.

For example, in the method, the second control resource set for the multicast control channel received when the wireless communication device is in the RRC-inactive state is carried in one of System Information Block (SIB) 1, SIB20, or a new SIB message.

For example, in the method, a search space for a broadcast data channel is used as the first search space for the multicast data channel. The method can include a control resource set for a broadcast data channel is used as the first control resource set for the multicast data channel.

For example, in the method, the first search space for the multicast data channel is different from a search space for a broadcast data channel. The method can include the first control resource set for the multicast data channel is different from a control resource set for a broadcast data channel.

For example, in the method, the first search space for the multicast data channel receiving when the wireless communication device is in the RRC-inactive state is configured for each service of the multicast reception, the first control resource set for the multicast data channel receiving when the wireless communication device is in the RRC-inactive state is configured for each service of multicast reception.

For example, in the method, a search space of the multicast data channel in an RRC-connected state is used as the first search space of the multicast data channel in the RRC-inactive state. The method can include a control resource set of the multicast data channel in the RRC-connected state is used as the first control resource set of the multicast data channel in the RRC-inactive state.

For example, in the method, the first search space for the multicast data channel received when the wireless communication device is in the RRC-inactive state is carried in one of System Information Block (SIB) 1, SIB20, or a new SIB message.

For example, in the method, the first search space for the multicast data channel received when the wireless communication device is in the RRC-inactive state is carried in the multicast control channel.

For example, in the method, the first control resource set for the multicast data channel received when the wireless communication device is in the RRC-inactive state is carried in one of System Information Block (SIB) 1, SIB20, or a new SIB message.

For example, in the method, the first control resource set for the multicast data channel received when the wireless communication device is in the RRC-inactive state is carried in the multicast control channel.

For example, in the method, the first search space for the multicast data channel is same as the second search space for the multicast control channel. The method can include the first control resource set for the multicast data channel is same as the second control resource set for the multicast control channel.

For example, in the method, the first BWP used in the RRC-inactive state is an initial BWP received in System Information Block 1 (SIB1).

For example, in the method, a BWP for multicast in RRC-connected is used as the first BWP for multicast in RRC-inactive.

For example, in the method, receiving, by the wireless communication device from the network when the wireless communication device is in the RRC-inactive state, System Information (SI) or paging using a common search space, the common search space is configured in the first BWP, where the first BWP does not contain an initial BWP received in System Information Block 1 (SIB1).

For example, the method can include the common search space is carried in a reconfiguration message or an RRC release message.

For example, in the method, the first configuration for the multicast control channel is carried in a System Information Block (SIB) message received using an initial BWP received in System Information Block 1 (SIB1).

For example, in the method, an initial value is carried in a Multicast Control Channel (MCCH), the initial value comprises of a count value of a first Packet Data Convergence Protocol (PDCP) Service Data Unit (SDU) waiting to be delivered to at least one upper layer.

At least one aspect is directed to a wireless communication apparatus can include at least one processor and a memory, where the at least one processor is configured to read code from the memory and implement any method as discussed herein.

At least one aspect is directed to a computer program product can include a computer-readable program medium code stored thereupon, the code, when executed by at least one processor, causing the at least one processor to implement any method as discussed herein.

At least one aspect is directed to a wireless communication apparatus can include at least one processor and a memory, where the at least one processor is configured to read code from the memory and implement any method as discussed herein.

At least one aspect is directed to a computer program product can include a computer-readable program medium code stored thereupon, the code, when executed by at least one processor, causing the at least one processor to implement any method as discussed herein.

The herein described subject matter sometimes illustrates different components contained within, or connected with, different other components. It is to be understood that such depicted architectures are illustrative, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality, and any two components capable of being so associated can also be viewed as being "operably couplable," to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of plural and/or singular terms herein, those having skill in the art can translate from the plural to the singular and/or from the singular to the plural as is appropriate to the context and/or application. The various singular/plural permutations may be expressly set forth herein for sake of clarity.

It is understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.).

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is further understood by those within the art that if a specific number of an introduced claim recitation is intended, such an intent is explicitly recited in the claim, and in the absence of such recitation, no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to the disclosure containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations).

Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general, such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It is further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" is understood to include the possibilities of "A" or "B" or "A and B."

Further, unless otherwise noted, the use of the words "approximate," "about," "around," "substantially," etc., mean plus or minus ten percent.

## Claims

1. A wireless communication method, comprising:
receiving (320), by a wireless communication device from a network, a first configuration supporting multicast reception, the multicast reception comprising multicast data channel and multicast control channel, the multicast reception is received by the wireless communication device in a Radio Resource Control, RRC,-inactive state, the first configuration comprises:
a first Bandwidth Part, BWP, configuration used for receiving the multicast reception in the RRC-inactive state;
for receiving the multicast data channel in the RRC-inactive state, a first search space, a first control resource set, a first frequency domain location, and a first bandwidth; and
for receiving the multicast control channel reception in the RRC-inactive state, a second search space, a second control resource set, a second frequency domain location, and a second bandwidth; and
receiving (340), by the wireless communication device from the network, the multicast reception according to the first configuration.

2. The wireless communication method of claim 1, comprising:
receiving (420), by the wireless communication device from the network when the wireless communication device is in an RRC-connected state, the multicast data channel using a second configuration, the second configuration comprising a UE-specific BWP;
transitioning (430), by the wireless communication device, from the RRC-connected state to the RRC-inactive state;
releasing or suspending (440), by the wireless communication device, the second configuration for the multicast data channel in response to transitioning from the RRC-connected state to the RRC-inactive state; and
receiving (460), by the wireless communication device from the network when the wireless communication device is in the RRC-inactive state, the multicast data channel using the first configuration, the first BWP comprising an initial BWP.

3. The wireless communication method of claim 1, comprising:
receiving (520), by the wireless communication device from the network when the wireless communication device is in an RRC-connected state, the multicast data channel using a second configuration, the second configuration comprising a first UE-specific BWP;
transitioning (530), by the wireless communication device, from the RRC-connected state to the RRC-inactive state; and
receiving (550), by the wireless communication device from the network when the wireless communication device is in the RRC-inactive state, the multicast data channel using the first configuration, the first BWP comprising a second UE-specific BWP, wherein the first configuration for the multicast data channel comprises the second configuration for the multicast data channel reception, and the first UE-specific BWP is the same as the second UE-specific BWP.

4. The wireless communication method of claim 1, comprising:
receiving (620), by the wireless communication device from the network when the wireless communication device is in an RRC-connected state, the multicast data channel using a second configuration, the second configuration comprising a UE-specific BWP;
transitioning (630), by the wireless communication device, from the RRC-connected state to the RRC-inactive state; and
receiving (650), by the wireless communication device from the network when the wireless communication device is in the RRC-inactive state, the multicast data channel using the first configuration, the first BWP comprising an initial BWP, wherein the first configuration for the multicast data channel comprises the second configuration for the multicast data channel.

5. The wireless communication method of claim 1, wherein at least one of:
a frequency domain location and bandwidth of a broadcast data channel is used as the first frequency domain location and the first bandwidth for the multicast data channel,
respectively; or
a frequency domain location and bandwidth of a broadcast control channel is used as the second frequency domain location and the second bandwidth for the multicast control channel, respectively.

6. The wireless communication method of claim 1, wherein at least one of
the first frequency domain location and the first bandwidth of the multicast data channel is different from a frequency domain location and a bandwidth for a broadcast data channel, respectively; or
the second frequency domain location and the second bandwidth of the multicast control channel is different from a frequency domain location and a bandwidth for a broadcast control channel, respectively.

7. The wireless communication method of claim 1, wherein
a frequency domain location and a bandwidth of the multicast data channel in a RRC-connected state is used as the first frequency domain location and the first bandwidth of the multicast data channel in the RRC-inactive state.

8. The wireless communication method of claim 1, wherein
the first frequency domain location and the first bandwidth of the multicast data channel received when the wireless communication device is in the RRC-inactive state is configured for each service of the multicast reception.

9. The wireless communication method of claim 1, wherein
the second frequency domain location for the multicast control channel and the first frequency domain location for the multicast data channel are configured to be non-overlapping; and
the second bandwidth for the multicast control channel and the first bandwidth for the multicast data channel are configured to be non-overlapping.

10. The wireless communication method of claim 1, wherein
the first frequency domain location and the first bandwidth for the multicast data channel contains the second frequency domain location and the second bandwidth for the multicast control channel, respectively.

11. The wireless communication method of claim 1, wherein
the first frequency domain location and the first bandwidth for the multicast data channel, and the second frequency domain location and the second bandwidth for the multicast control channel, are received in System Information Block, SIB, 20.

12. The wireless communication method of claim 1, wherein
the first frequency domain location and the first bandwidth for the multicast data channel and the second frequency domain location and the second bandwidth for the multicast control channel are received in a new System Information Block, SIB, message, or
wherein
a search space for a broadcast control channel is used as the second search space for the multicast control channel; and
a control resource set for a broadcast control channel is used as the second control resource set for the multicast control channel, or
wherein
the second search space for the multicast control channel is different from a search space for a broadcast control channel; and
the second control resource set for the multicast control channel is different from a control resource set for a broadcast control channel, or
wherein
the second search space for the multicast control channel received when the wireless communication device is in the RRC-inactive state is carried in one of System Information Block, SIB, 1, SIB20, or a new SIB message, or
wherein
the second control resource set for the multicast control channel received when the wireless communication device is in the RRC-inactive state is carried in one of System Information Block, SIB, 1, SIB20, or a new SIB message, or
wherein
a search space for a broadcast data channel is used as the first search space for the multicast data channel; and
a control resource set for a broadcast data channel is used as the first control resource set for the multicast data channel.

13. A wireless communication device (104a, 104b), comprising:
at least one processor configured to:
receive, via a receiver from a network, a first configuration supporting multicast reception, the multicast reception comprising multicast data channel and multicast control channel, the multicast reception is received by the wireless communication device in a Radio Resource Control, RRC,-inactive state, the first configuration comprises:
a first Bandwidth Part, BWP, configuration used for receiving the multicast reception in the RRC-inactive state;
for receiving the multicast data channel in the RRC-inactive state, a first search space, a first control resource set, a first frequency domain location, and a first bandwidth; and
for receiving the multicast control channel reception in the RRC-inactive state, a second search space, a second control resource set, a second frequency domain location, and a second bandwidth; and
receive, via the receiver from the network, the multicast reception according to the first configuration.

14. A wireless communication method, comprising:
sending (310), by a network to a wireless communication device, first configuration supporting multicast reception of the wireless communication device, the multicast reception comprises multicast data channel and multicast control channel, the multicast reception is received by the wireless communication device in a Radio Resource Control, RRC,-inactive state, wherein the first configuration comprises:
a first Bandwidth Part, BWP, configuration used for the wireless communication device for receiving the multicast reception in the RRC-inactive state;
for receiving the multicast data channel in the RRC-inactive state by the wireless communication device, a first search space, a first control resource set, a first frequency domain location, and a first bandwidth; and
for receiving the multicast control channel reception in the RRC-inactive state the wireless communication device, a second search space, a second control resource set, a second frequency domain location, and a second bandwidth; and
sending (330), by the network to the wireless communication device when the wireless communication device is in the RRC-inactive state, the multicast reception according to the first configuration.

15. A network node (102), comprising:
at least one processor configured to:
send, via a transmitter to a wireless communication device, first configuration supporting multicast reception of the wireless communication device, the multicast reception comprises multicast data channel and multicast control channel, the multicast reception is received by the wireless communication device in a Radio Resource Control, RRC,-inactive state, wherein the first configuration comprises:
a first Bandwidth Part, BWP, configuration used for the wireless communication device for receiving the multicast reception in the RRC-inactive state;
for receiving the multicast data channel in the RRC-inactive state by the wireless communication device, a first search space, a first control resource set, a first frequency domain location, and a first bandwidth; and
for receiving the multicast control channel reception in the RRC-inactive state the wireless communication device, a second search space, a second control resource set, a second frequency domain location, and a second bandwidth; and
send, via the transmitter to the wireless communication device when the wireless communication device is in the RRC-inactive state, the multicast reception according to the first configuration.

## Patentansprüche

1. Ein drahtloses Kommunikationsverfahren, umfassend:
Empfangen (320) durch ein drahtloses Kommunikationsgerät von einem Netzwerk einer ersten Konfiguration zur Unterstützung eines Multicast-Empfangs, wobei der Multicast-Empfang einen Multicast-Datenkanal und einen Multicast-Steuerkanal umfasst,
wobei der Multicast-Empfang von dem drahtlosen Kommunikationsgerät in einem Radio-Resource-Control-, RRC-inaktiven Zustand empfangen wird, wobei die erste Konfiguration umfasst:
eine erste Bandbreitenteil-, BWP-, Konfiguration, die zum Empfangen des Multicast-Empfangs im RRC-inaktiven Zustand verwendet wird;
zum Empfangen des Multicast-Datenkanals im RRC-inaktiven Zustand einen ersten Suchraum, einen ersten Steuerressourcensatz, eine erste Frequenzbereichsposition und eine erste Bandbreite; und
zum Empfangen des Multicast-Steuerkanals im RRC-inaktiven Zustand einen zweiten Suchraum, einen zweiten Steuerressourcensatz, eine zweite Frequenzbereichsposition und eine zweite Bandbreite; und
Empfangen (340) durch das drahtlose Kommunikationsgerät von dem Netzwerk des Multicast-Empfangs gemäß der ersten Konfiguration.

2. Das drahtlose Kommunikationsverfahren nach Anspruch 1, umfassend:
Empfangen (420) durch das drahtlose Kommunikationsgerät von dem Netzwerk, wenn sich das drahtlose Kommunikationsgerät in einem RRC-verbundenen Zustand befindet, des Multicast-Datenkanals unter Verwendung einer zweiten Konfiguration, wobei die zweite Konfiguration eine UE-spezifische BWP umfasst;
Übergang (430) durch das drahtlose Kommunikationsgerät von dem RRC-verbundenen Zustand in den RRC-inaktiven Zustand;
Freigeben oder Suspendieren (440) durch das drahtlose Kommunikationsgerät der zweiten Konfiguration für den Multicast-Datenkanal als Reaktion auf den Übergang von dem RRC-verbundenen Zustand in den RRC-inaktiven Zustand; und
Empfangen (460) durch das drahtlose Kommunikationsgerät von dem Netzwerk, wenn sich das drahtlose Kommunikationsgerät in dem RRC-inaktiven Zustand befindet, des Multicast-Datenkanals unter Verwendung der ersten Konfiguration, wobei die erste BWP eine initiale BWP umfasst.

3. Das drahtlose Kommunikationsverfahren nach Anspruch 1, umfassend:
Empfangen (520) durch das drahtlose Kommunikationsgerät von dem Netzwerk, wenn sich das drahtlose Kommunikationsgerät in einem RRC-verbundenen Zustand befindet, des Multicast-Datenkanals unter Verwendung einer zweiten Konfiguration, wobei die zweite Konfiguration eine erste UE-spezifische BWP umfasst;
Übergang (530) durch das drahtlose Kommunikationsgerät von dem RRC-verbundenen Zustand in den RRC-inaktiven Zustand; und
Empfangen (550) durch das drahtlose Kommunikationsgerät von dem Netzwerk, wenn sich das drahtlose Kommunikationsgerät in dem RRC-inaktiven Zustand befindet, des Multicast-Datenkanals unter Verwendung der ersten Konfiguration, wobei die erste BWP eine zweite UE-spezifische BWP umfasst, wobei die erste Konfiguration für den Multicast-Datenkanal die zweite Konfiguration für den Multicast-Datenkanal-Empfang umfasst und die erste UE-spezifische BWP dieselbe ist wie die zweite UE-spezifische BWP.

4. Das drahtlose Kommunikationsverfahren nach Anspruch 1, umfassend:
Empfangen (620) durch das drahtlose Kommunikationsgerät von dem Netzwerk, wenn sich das drahtlose Kommunikationsgerät in einem RRC-verbundenen Zustand befindet, des Multicast-Datenkanals unter Verwendung einer zweiten Konfiguration, wobei die zweite Konfiguration eine UE-spezifische BWP umfasst;
Übergang (630) durch das drahtlose Kommunikationsgerät von dem RRC-verbundenen Zustand in den RRC-inaktiven Zustand; und
Empfangen (650) durch das drahtlose Kommunikationsgerät von dem Netzwerk, wenn sich das drahtlose Kommunikationsgerät in dem RRC-inaktiven Zustand befindet, des Multicast-Datenkanals unter Verwendung der ersten Konfiguration, wobei die erste BWP eine initiale BWP umfasst, wobei die erste Konfiguration für den Multicast-Datenkanal die zweite Konfiguration für den Multicast-Datenkanal umfasst.

5. Das drahtlose Kommunikationsverfahren nach Anspruch 1, wobei mindestens eines von:
eine Frequenzbereichsposition und eine Bandbreite eines Broadcast-Datenkanals jeweils als die erste Frequenzbereichsposition und die erste Bandbreite für den Multicast-Datenkanal verwendet werden; oder
eine Frequenzbereichsposition und eine Bandbreite eines Broadcast-Steuerkanals jeweils als die zweite Frequenzbereichsposition und die zweite Bandbreite für den Multicast-Steuerkanal verwendet werden.

6. Das drahtlose Kommunikationsverfahren nach Anspruch 1, wobei mindestens eines von:
die erste Frequenzbereichsposition und die erste Bandbreite des Multicast-Datenkanals unterschiedlich sind von einer Frequenzbereichsposition und einer Bandbreite eines Broadcast-Datenkanals; oder
die zweite Frequenzbereichsposition und die zweite Bandbreite des Multicast-Steuerkanals unterschiedlich sind von einer Frequenzbereichsposition und einer Bandbreite eines Broadcast-Steuerkanals.

7. Das drahtlose Kommunikationsverfahren nach Anspruch 1, wobei
eine Frequenzbereichsposition und eine Bandbreite des Multicast-Datenkanals in einem RRC-verbundenen Zustand als die erste Frequenzbereichsposition und die erste Bandbreite des Multicast-Datenkanals im RRC-inaktiven Zustand verwendet werden.

8. Das drahtlose Kommunikationsverfahren nach Anspruch 1, wobei
die erste Frequenzbereichsposition und die erste Bandbreite des Multicast-Datenkanals, die empfangen werden, wenn sich das drahtlose Kommunikationsgerät in dem RRC-inaktiven Zustand befindet, für jeden Dienst des Multicast-Empfangs konfiguriert sind.

9. Das drahtlose Kommunikationsverfahren nach Anspruch 1, wobei
die zweite Frequenzbereichsposition für den Multicast-Steuerkanal und die erste Frequenzbereichsposition für den Multicast-Datenkanal so konfiguriert sind, dass sie sich nicht überlappen; und
die zweite Bandbreite für den Multicast-Steuerkanal und die erste Bandbreite für den Multicast-Datenkanal so konfiguriert sind, dass sie sich nicht überlappen.

10. Das drahtlose Kommunikationsverfahren nach Anspruch 1, wobei
die erste Frequenzbereichsposition und die erste Bandbreite für den Multicast-Datenkanal die zweite Frequenzbereichsposition und die zweite Bandbreite für den Multicast-Steuerkanal jeweils enthalten.

11. Das drahtlose Kommunikationsverfahren nach Anspruch 1, wobei
die erste Frequenzbereichsposition und die erste Bandbreite für den Multicast-Datenkanal sowie die zweite Frequenzbereichsposition und die zweite Bandbreite für den Multicast-Steuerkanal in einem Systeminformationblock, SIB, 20 empfangen werden.

12. Das drahtlose Kommunikationsverfahren nach Anspruch 1, wobei
die erste Frequenzbereichsposition und die erste Bandbreite für den Multicast-Datenkanal sowie die zweite Frequenzbereichsposition und die zweite Bandbreite für den Multicast-Steuerkanal in einer neuen Systeminformationblock-, SIB-, Nachricht empfangen werden, oder
wobei ein Suchraum für einen Broadcast-Steuerkanal als der zweite Suchraum für den Multicast-Steuerkanal verwendet wird und ein Steuerressourcensatz für einen Broadcast-Steuerkanal als der zweite Steuerressourcensatz für den Multicast-Steuerkanal verwendet wird, oder
wobei der zweite Suchraum für den Multicast-Steuerkanal sich von einem Suchraum für einen Broadcast-Steuerkanal unterscheidet und der zweite Steuerressourcensatz für den Multicast-Steuerkanal sich von einem Steuerressourcensatz für einen Broadcast-Steuerkanal unterscheidet, oder
wobei der zweite Suchraum für den Multicast-Steuerkanal, der empfangen wird, wenn sich das drahtlose Kommunikationsgerät in dem RRC-inaktiven Zustand befindet, in einem von Systeminformationblock, SIB, 1, SIB20 oder einer neuen SIB-Nachricht übertragen wird, oder
wobei der zweite Steuerressourcensatz für den Multicast-Steuerkanal, der empfangen wird, wenn sich das drahtlose Kommunikationsgerät in dem RRC-inaktiven Zustand befindet, in einem von Systeminformationblock, SIB, 1, SIB20 oder einer neuen SIB-Nachricht übertragen wird, oder
wobei ein Suchraum für einen Broadcast-Datenkanal als der erste Suchraum für den Multicast-Datenkanal verwendet wird und ein Steuerressourcensatz für einen Broadcast-Datenkanal als der erste Steuerressourcensatz für den Multicast-Datenkanal verwendet wird.

13. Ein drahtloses Kommunikationsgerät (104a, 104b), umfassend:
mindestens einen Prozessor, der dazu konfiguriert ist:
über einen Empfänger von einem Netzwerk eine erste Konfiguration zur Unterstützung eines Multicast-Empfangs zu empfangen, wobei der Multicast-Empfang einen Multicast-Datenkanal und einen Multicast-Steuerkanal umfasst, wobei der Multicast-Empfang von dem drahtlosen Kommunikationsgerät in einem Radio-Resource-Control-, RRC-inaktiven Zustand empfangen wird, wobei die erste Konfiguration umfasst:
eine erste Bandbreitenteil-, BWP-, Konfiguration, die zum Empfangen des Multicast-Empfangs im RRC-inaktiven Zustand verwendet wird;
zum Empfangen des Multicast-Datenkanals im RRC-inaktiven Zustand einen ersten Suchraum, einen ersten Steuerressourcensatz, eine erste Frequenzbereichsposition und eine erste Bandbreite; und
zum Empfangen des Multicast-Steuerkanals im RRC-inaktiven Zustand einen zweiten Suchraum, einen zweiten Steuerressourcensatz, eine zweite Frequenzbereichsposition und eine zweite Bandbreite; und
über den Empfänger von dem Netzwerk den Multicast-Empfang gemäß der ersten Konfiguration zu empfangen.

14. Ein drahtloses Kommunikationsverfahren, umfassend:
Senden (310) durch ein Netzwerk an ein drahtloses Kommunikationsgerät einer ersten Konfiguration zur Unterstützung des Multicast-Empfangs des drahtlosen Kommunikationsgeräts, wobei der Multicast-Empfang einen Multicast-Datenkanal und einen Multicast-Steuerkanal umfasst, wobei der Multicast-Empfang von dem drahtlosen Kommunikationsgerät in einem Radio-Resource-Control-, RRC-inaktiven Zustand empfangen wird, wobei die erste Konfiguration umfasst:
eine erste Bandbreitenteil-, BWP-, Konfiguration, die von dem drahtlosen Kommunikationsgerät zum Empfangen des Multicast-Empfangs im RRC-inaktiven Zustand verwendet wird;
zum Empfangen des Multicast-Datenkanals im RRC-inaktiven Zustand durch das drahtlose Kommunikationsgerät einen ersten Suchraum, einen ersten Steuerressourcensatz, eine erste Frequenzbereichsposition und eine erste Bandbreite; und
zum Empfangen des Multicast-Steuerkanals im RRC-inaktiven Zustand durch das drahtlose Kommunikationsgerät einen zweiten Suchraum, einen zweiten Steuerressourcensatz, eine zweite Frequenzbereichsposition und eine zweite Bandbreite; und
Senden (330) durch das Netzwerk an das drahtlose Kommunikationsgerät, wenn sich das drahtlose Kommunikationsgerät in dem RRC-inaktiven Zustand befindet, des Multicast-Empfangs gemäß der ersten Konfiguration.

15. Ein Netzwerkknoten (102), umfassend:
mindestens einen Prozessor, der dazu konfiguriert ist:
über einen Sender an ein drahtloses Kommunikationsgerät eine erste Konfiguration zur Unterstützung des Multicast-Empfangs des drahtlosen Kommunikationsgeräts zu senden, wobei der Multicast-Empfang einen Multicast-Datenkanal und einen Multicast-Steuerkanal umfasst, wobei der Multicast-Empfang von dem drahtlosen Kommunikationsgerät in einem Radio-Resource-Control-, RRC-inaktiven Zustand empfangen wird, wobei die erste Konfiguration umfasst:
eine erste Bandbreitenteil-, BWP-, Konfiguration, die von dem drahtlosen Kommunikationsgerät zum Empfangen des Multicast-Empfangs im RRC-inaktiven Zustand verwendet wird;
zum Empfangen des Multicast-Datenkanals im RRC-inaktiven Zustand durch das drahtlose Kommunikationsgerät einen ersten Suchraum, einen ersten Steuerressourcensatz, eine erste Frequenzbereichsposition und eine erste Bandbreite; und
zum Empfangen des Multicast-Steuerkanals im RRC-inaktiven Zustand durch das drahtlose Kommunikationsgerät einen zweiten Suchraum, einen zweiten Steuerressourcensatz, eine zweite Frequenzbereichsposition und eine zweite Bandbreite; und
über den Sender an das drahtlose Kommunikationsgerät, wenn sich das drahtlose Kommunikationsgerät in dem RRC-inaktiven Zustand befindet, den Multicast-Empfang gemäß der ersten Konfiguration zu senden.

## Revendications

1. Procédé de communication sans fil, comprenant:
la réception (320), par un dispositif de communication sans fil depuis un réseau, d'une première configuration prenant en charge une réception multicast, la réception multicast comprenant un canal de données multicast et un canal de contrôle multicast, la réception multicast étant reçue par le dispositif de communication sans fil dans un état Radio Resource Control, RRC,-inactif, la première configuration comprend:
une première configuration de Bandwidth Part, BWP, utilisée pour recevoir la réception multicast dans l'état RRC-inactif;
pour recevoir le canal de données multicast dans l'état RRC-inactif, un premier espace de recherche, un premier ensemble de ressources de contrôle, un premier emplacement dans le domaine fréquentiel et une première largeur de bande; et
pour recevoir la réception du canal de contrôle multicast dans l'état RRC-inactif, un second espace de recherche, un second ensemble de ressources de contrôle, un second emplacement dans le domaine fréquentiel et une seconde largeur de bande; et
la réception (340), par le dispositif de communication sans fil depuis le réseau, de la réception multicast selon la première configuration.

2. Le procédé de communication sans fil de la revendication 1, comprenant:
la réception (420), par le dispositif de communication sans fil depuis le réseau lorsque le dispositif de communication sans fil est dans un état RRC-connecté, du canal de données multicast en utilisant une seconde configuration, la seconde configuration comprenant un BWP spécifique à l'UE;
la transition (430), par le dispositif de communication sans fil, de l'état RRC-connecté vers l'état RRC-inactif;
la libération ou la suspension (440), par le dispositif de communication sans fil, de la seconde configuration pour le canal de données multicast en réponse à la transition de l'état RRC-connecté vers l'état RRC-inactif; et
la réception (460), par le dispositif de communication sans fil depuis le réseau lorsque le dispositif de communication sans fil est dans l'état RRC-inactif, du canal de données multicast en utilisant la première configuration, le premier BWP comprenant un BWP initial.

3. Le procédé de communication sans fil de la revendication 1, comprenant:
la réception (520), par le dispositif de communication sans fil depuis le réseau lorsque le dispositif de communication sans fil est dans un état RRC-connecté, du canal de données multicast en utilisant une seconde configuration, la seconde configuration comprenant un premier BWP spécifique à l'UE;
la transition (530), par le dispositif de communication sans fil, de l'état RRC-connecté vers l'état RRC-inactif; et
la réception (550), par le dispositif de communication sans fil depuis le réseau lorsque le dispositif de communication sans fil est dans l'état RRC-inactif, du canal de données multicast en utilisant la première configuration, le premier BWP comprenant un second BWP spécifique à l'UE, dans lequel la première configuration pour le canal de données multicast comprend la seconde configuration pour la réception du canal de données multicast, et le premier BWP spécifique à l'UE est identique au second BWP spécifique à l'UE.

4. Le procédé de communication sans fil de la revendication 1, comprenant:
la réception (620), par le dispositif de communication sans fil depuis le réseau lorsque le dispositif de communication sans fil est dans un état RRC-connecté, du canal de données multicast en utilisant une seconde configuration, la seconde configuration comprenant un BWP spécifique à l'UE;
la transition (630), par le dispositif de communication sans fil, de l'état RRC-connecté vers l'état RRC-inactif; et
la réception (650), par le dispositif de communication sans fil depuis le réseau lorsque le dispositif de communication sans fil est dans l'état RRC-inactif, du canal de données multicast en utilisant la première configuration, le premier BWP comprenant un BWP initial,
dans lequel la première configuration pour le canal de données multicast comprend la seconde configuration pour le canal de données multicast.

5. Le procédé de communication sans fil de la revendication 1, selon lequel au moins l'un de:
un emplacement dans le domaine fréquentiel et une largeur de bande d'un canal de données de diffusion est utilisé respectivement comme le premier emplacement dans le domaine fréquentiel et la première largeur de bande pour le canal de données multicast; ou
un emplacement dans le domaine fréquentiel et une largeur de bande d'un canal de contrôle de diffusion est utilisé respectivement comme le second emplacement dans le domaine fréquentiel et la seconde largeur de bande pour le canal de contrôle multicast.

6. Le procédé de communication sans fil de la revendication 1, selon lequel au moins l'un de:
le premier emplacement dans le domaine fréquentiel et la première largeur de bande du canal de données multicast est différent respectivement d'un emplacement dans le domaine fréquentiel et d'une largeur de bande pour un canal de données de diffusion; ou
le second emplacement dans le domaine fréquentiel et la seconde largeur de bande du canal de contrôle multicast est différent respectivement d'un emplacement dans le domaine fréquentiel et d'une largeur de bande pour un canal de contrôle de diffusion.

7. Le procédé de communication sans fil de la revendication 1, selon lequel:
un emplacement dans le domaine fréquentiel et une largeur de bande du canal de données multicast dans un état RRC-connecté est utilisé comme le premier emplacement dans le domaine fréquentiel et la première largeur de bande du canal de données multicast dans l'état RRC-inactif.

8. Le procédé de communication sans fil de la revendication 1, selon lequel:
le premier emplacement dans le domaine fréquentiel et la première largeur de bande du canal de données multicast reçu lorsque le dispositif de communication sans fil est dans l'état RRC-inactif est configuré pour chaque service de la réception multicast.

9. Le procédé de communication sans fil de la revendication 1, selon lequel:
le second emplacement dans le domaine fréquentiel pour le canal de contrôle multicast et le premier emplacement dans le domaine fréquentiel pour le canal de données multicast sont configurés de manière à ne pas se chevaucher; et
la seconde largeur de bande pour le canal de contrôle multicast et la première largeur de bande pour le canal de données multicast sont configurées de manière à ne pas se chevaucher.

10. Le procédé de communication sans fil de la revendication 1, selon lequel:
le premier emplacement dans le domaine fréquentiel et la première largeur de bande pour le canal de données multicast contiennent respectivement le second emplacement dans le domaine fréquentiel et la seconde largeur de bande pour le canal de contrôle multicast.

11. Le procédé de communication sans fil de la revendication 1, selon lequel:
le premier emplacement dans le domaine fréquentiel et la première largeur de bande pour le canal de données multicast, et le second emplacement dans le domaine fréquentiel et la seconde largeur de bande pour le canal de contrôle multicast, sont reçus dans le System Information Block, SIB, 20.

12. Le procédé de communication sans fil de la revendication 1, selon lequel:
le premier emplacement dans le domaine fréquentiel et la première largeur de bande pour le canal de données multicast et le second emplacement dans le domaine fréquentiel et la seconde largeur de bande pour le canal de contrôle multicast sont reçus dans un nouveau message System Information Block, SIB, ou
selon lequel
un espace de recherche pour un canal de contrôle de diffusion est utilisé comme le second espace de recherche pour le canal de contrôle multicast; et
un ensemble de ressources de contrôle pour un canal de contrôle de diffusion est utilisé comme le second ensemble de ressources de contrôle pour le canal de contrôle multicast, ou
selon lequel
le second espace de recherche pour le canal de contrôle multicast est différent d'un espace de recherche pour un canal de contrôle de diffusion; et
le second ensemble de ressources de contrôle pour le canal de contrôle multicast est différent d'un ensemble de ressources de contrôle pour un canal de contrôle de diffusion, ou
selon lequel
le second espace de recherche pour le canal de contrôle multicast reçu lorsque le dispositif de communication sans fil est dans l'état RRC-inactif est transporté dans l'un de System Information Block, SIB, 1, SIB20, ou un nouveau message SIB, ou
selon lequel
le second ensemble de ressources de contrôle pour le canal de contrôle multicast reçu lorsque le dispositif de communication sans fil est dans l'état RRC-inactif est transporté dans l'un de System Information Block, SIB, 1, SIB20, ou un nouveau message SIB, ou
selon lequel
un espace de recherche pour un canal de données de diffusion est utilisé comme le premier espace de recherche pour le canal de données multicast; et
un ensemble de ressources de contrôle pour un canal de données de diffusion est utilisé comme le premier ensemble de ressources de contrôle pour le canal de données multicast.

13. Dispositif de communication sans fil (104a, 104b), comprenant:
au moins un processeur configuré pour:
recevoir, via un récepteur depuis un réseau, une première configuration prenant en charge une réception multicast, la réception multicast comprenant un canal de données multicast et un canal de contrôle multicast, la réception multicast étant reçue par le dispositif de communication sans fil dans un état Radio Resource Control, RRC,-inactif, la première configuration comprend:
une première configuration de Bandwidth Part, BWP, utilisée pour recevoir la réception multicast dans l'état RRC-inactif;
pour recevoir le canal de données multicast dans l'état RRC-inactif, un premier espace de recherche, un premier ensemble de ressources de contrôle, un premier emplacement dans le domaine fréquentiel et une première largeur de bande; et
pour recevoir la réception du canal de contrôle multicast dans l'état RRC-inactif, un second espace de recherche, un second ensemble de ressources de contrôle, un second emplacement dans le domaine fréquentiel et une seconde largeur de bande; et
recevoir, via le récepteur depuis le réseau, la réception multicast selon la première configuration.

14. Procédé de communication sans fil, comprenant:
l'envoi (310), par un réseau vers un dispositif de communication sans fil, d'une première configuration prenant en charge la réception multicast du dispositif de communication sans fil, la réception multicast comprenant un canal de données multicast et un canal de contrôle multicast, la réception multicast étant reçue par le dispositif de communication sans fil dans un état Radio Resource Control, RRC,-inactif, dans lequel la première configuration comprend:
une première configuration de Bandwidth Part, BWP, utilisée par le dispositif de communication sans fil pour recevoir la réception multicast dans l'état RRC-inactif;
pour recevoir le canal de données multicast dans l'état RRC-inactif par le dispositif de communication sans fil, un premier espace de recherche, un premier ensemble de ressources de contrôle, un premier emplacement dans le domaine fréquentiel et une première largeur de bande; et
pour recevoir la réception du canal de contrôle multicast dans l'état RRC-inactif par le dispositif de communication sans fil, un second espace de recherche, un second ensemble de ressources de contrôle, un second emplacement dans le domaine fréquentiel et une seconde largeur de bande; et
l'envoi (330), par le réseau vers le dispositif de communication sans fil lorsque le dispositif de communication sans fil est dans l'état RRC-inactif, de la réception multicast selon la première configuration.

15. Nœud de réseau (102), comprenant:
au moins un processeur configuré pour:
envoyer, via un émetteur vers un dispositif de communication sans fil, une première configuration prenant en charge la réception multicast du dispositif de communication sans fil, la réception multicast comprenant un canal de données multicast et un canal de contrôle multicast, la réception multicast étant reçue par le dispositif de communication sans fil dans un état Radio Resource Control, RRC,-inactif, dans lequel la première configuration comprend:
une première configuration de Bandwidth Part, BWP, utilisée par le dispositif de communication sans fil pour recevoir la réception multicast dans l'état RRC-inactif;
pour recevoir le canal de données multicast dans l'état RRC-inactif par le dispositif de communication sans fil, un premier espace de recherche, un premier ensemble de ressources de contrôle, un premier emplacement dans le domaine fréquentiel et une première largeur de bande; et
pour recevoir la réception du canal de contrôle multicast dans l'état RRC-inactif par le dispositif de communication sans fil, un second espace de recherche, un second ensemble de ressources de contrôle, un second emplacement dans le domaine fréquentiel et une seconde largeur de bande; et
envoyer, via l'émetteur vers le dispositif de communication sans fil lorsque le dispositif de communication sans fil est dans l'état RRC-inactif, la réception multicast selon la première configuration.
